# EUROPÄISCHE PATENTSCHRIFT

(11) **EP 0 997 469 B1**
(45) Veröffentlichungstag und Bekanntmachung des Hinweises auf die Patenterteilung: **14.07.2004**
(21) Anmeldenummer: 99118740.2
(22) Anmeldetag: 22.09.1999
(51) Int. Cl.: C07F 7/21, C08G 77/04, C08G 77/26

(54) **Aminopropyl-funktionelle Siloxan-Oligomere**
Aminopropyl-functional siloxane oligomers
Oligomères de siloxanes à fonction aminopropyl

(30) Priorität: 27.10.1998 DE 19849308
(43) Veröffentlichungstag der Anmeldung: 03.05.2000
(73) Patentinhaber: Degussa AG, 40474 Düsseldorf (DE)
(72) Erfinder: Mack, Helmut, Dr., 79618 Rheinfelden (DE); Barfurth, Dieter, 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 518 057
- EP-A- 0 675 128
- EP-A- 0 716 127
- EP-A- 0 716 128
- EP-A- 0 814 110

## Beschreibung

Die vorliegende Erfindung betrifft Gemische kettenförmiger und cyclischer Siloxan-Oligomerer der allgemeinen Formeln I und II, 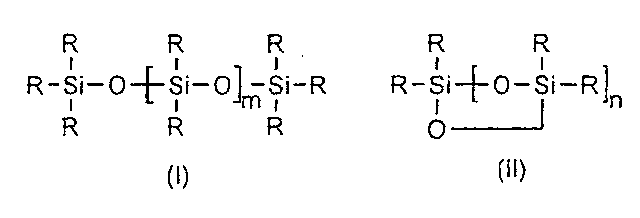 in denen die Substituenten R neben Alkoxy-Gruppen aus organofunktionellen Gruppen bestehen, wobei an ein Silicium-Atom höchstens eine organofunktionelle Gruppe gebunden ist.

Ferner betrifft die vorliegende Erfindung ein Verfahren zur Herstellung besagter Gemische sowie ihre Verwendung.

Gemische kettenförmiger und cyclischer Siloxan-Oligomerer werden beispielsweise durch eine gezielte Hydrolyse bzw. Kondensation organofunktioneller Alkoxysilane erhalten. Ein besonderes Problem bei der Herstellung multifunktioneller Siloxan-Oligomerer stellt das stark unterschiedliche Hydrolyse- bzw. Kondensationsverhalten der einzelnen Organoalkoxy- bzw. Organochlorsilane dar.

Aus EP 0 716 128 A2, EP 0 716 127 A2 sowie EP 0 675 128 A1 sind wäßrige Lösungen Amino-funktioneller und OH-Gruppen-enthaltender Organosilane bzw. Organosiloxane bekannt. Diese Organosilansysteme sind praktisch vollständig hydrolysiert.

Aus EP 0 518 057 A1 und DE 196 24 032 A1 gehen Gemische kettenförmiger und cyclischer Vinyl- sowie Alkyl-funktioneller Siloxan-Oligomerer hervor, die im übrigen Alkoxygruppen tragen. Solche Gemische werden beispielsweise zur Hydrophobierung von mineralischen Oberflächen und pulverförmigen Stoffen sowie als Vernetzungsmittel für thermoplastische Polyolefine eingesetzt.

Aus einer älteren deutschen Patentanmeldung mit der Nr. 198 34 990.4 sind Gemische kettenförmiger und cyclischer Acryl- oder Methacryloxypropyl-Gruppen enthaltender Siloxan-Oligomerer zu entnehmen.

Solche Siloxan-Oligomergemische können beispielsweise zur Oberflächenbehandlung von mineralischen Oberflächen oder pulverförmigen Stoffen, wie z. B. Titandioxid, Talkum, Ton, Kieselsäuren, Quarz, Kaolin, Aluminiumhydroxid, Magnesiumhydroxid, Bentonit, Montmorillonit, Glimmer (Muskovitglimmer), Calciumcarbonat (Kreide, Dolomit), eingesetzt werden. Auch als Haftvermittler in z. B. kaolingefüllten Gummicompounds werden besagte Siloxan-Oligomergemische eingesetzt.

Der vorliegenden Erfindung lag die Aufgabe zugrunde, weitere organofunktionelle Siloxan-Oligomergemische, insbesondere auf Basis Amino-funktioneller Verbindungen, bereitzustellen.

Die gestellte Aufgabe wird erfindungsgemäß entsprechend den Angaben der Patentansprüche gelöst.

Überraschender Weise wurde gefunden, daß man ein Gemisch kettenförmiger und cyclischer Siloxan-Oligomerer der allgemeinen Formeln I und II, 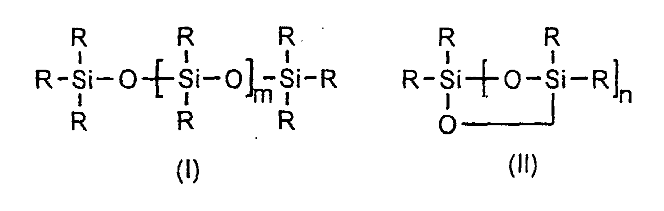 in denen die Substituenten R aus
(i) Aminopropyl-funktionellen Gruppen der Formel
   -(CH₂)₃-NH₂ oder -(CH₂)₃-NHR' oder -(CH₂)₃-NH(CH₂)₂-NH₂ oder -(CH₂)₃-NH(CH₂)₂-NH(CH₂)₂-NH₂, worin R' eine lineare, verzweigte oder cyclische Alkyl-Gruppe mit 1 bis 18 C-Atomen oder eine Aryl-Gruppe mit 6 bis 12 C-Atomen bedeutet, und
(ii) Methoxy-, Ethoxy-, 2-Methoxyethoxy- und/oder Propoxy-Gruppen und
(iii) gegebenenfalls Alkyl-, Alkenyl-, Isoalkyl-, Cycloalkyl- mit 1 bis 18 C-Atomen und/oder Aryl-Gruppen mit 6 bis 12 C-Atomen bestehen,
wobei an ein Silicium-Atom höchstens eine Aminopropyl-funktionelle Gruppe gebunden ist und der Oligomerisierungsgrad für Verbindungen der allgemeinen Formel I im Bereich von 2 < m < 30 und der für Verbindungen der allgemeinen Formel II von 3 ≤ n ≤ 30 und der Quotient aus dem molaren Verhältnis Si/Alkoxy-Gruppierung ≥ 0,5 ist, durch eine gezielte Umsetzung erhalten kann, indem man als Komponente A mindestens ein Aminopropylfunktinelles Trialkoxysilan oder ein Aminopropyl-funktionelles Methylalkoxysilan und gegebenenfalls als Komponente B mindestens ein Alkyl-, Alkenyl-, Isoalkyl-, Cycloalkyl-trialkoxysilan mit 1 bis 18 C-Atomen und/oder Phenyltrialkoxysilan und/oder Alkyl-, Alkenyl-, Isoalkyl-, Cycloalkylmethyldialkoxysilan mit 1 bis 18 C-Atomen und/oder Phenylmethyldialkoxysilan und gegebenenfalls als Komponente C ein Tetraalkoxysilan einsetzt, die Komponenten A, gegebenenfalls B und gegebenenfalls C nacheinander oder in Mischung unter Einsatz von 0,6 bis 1,2 mol Wasser pro 1 mol Si und der 0,1- bis 5fachen Gewichtsmenge an Methanol und/oder Ethanol, bezogen auf die eingesetzten Alkoxysilane, bei einer Temperatur von 10 bis 95 °C gezielt hydrolysiert bzw. kondensiert und anschließend das Produktgemisch unter Normaldruck bzw. unter vermindertem Druck und einer Sumpftemperatur bis 120°C destillativ aufarbeitet. Geeigneterweise werden dabei der freie Alkohol und gegebenenfalls Reste der monomeren, nicht hydrolysierten Ausgangsstoffe aus dem Produkt entfernt. Somit kann ein weiteres Amino-funktionelles Siloxan-Oligomerengemisch bereitgestellt werden. Es ist von besonderem Vorteil, daß die Hydrolyse bzw. Kondensation ohne einen systemfremden Zusatzstoff, beispielsweise einem Hydrolyse- bzw. Kondensationskatalysator, gezielt durchgeführt werden kann.

So erhaltene erfindungsgemäße Gemische kettenförmiger und cyclischer Siloxan-Oligomerer sind üblicherweise homogene, klare, farblose bis schwach gelb gefärbte, niedrigviskose, lagerstabile Flüssigkeiten und besitzen bevorzugt einen Flammpunkt >100 °C.

Durch die oben dargelegte Herstellweise kann man in vorteilhafter Weise erfindungsgemäße Siloxan-Oligomere erzeugen, welche bevorzugt eine statistische Verteilung verschiedenfunktioneller [-Si(R)(R)O-]-Einheiten besitzen.

Auch ist es vorteilhaft, daß der Siedepunkt der erfindungsgemäßen Gemische kettenförmiger und cyclischer Siloxan-Oligomerer in der Regel bei einer Temperatur >200 °C liegt.

Gegenstand der vorliegenden Erfindung ist daher ein Gemisch kettenförmiger und cyclischer Siloxan-Oligomerer der allgemeinen Formeln I und II, 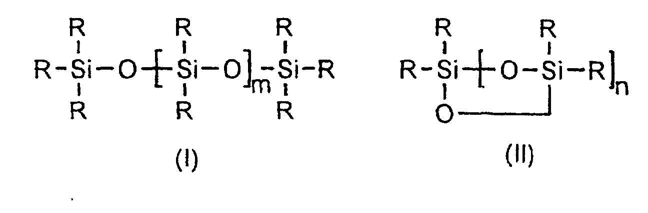 in denen die Substituenten R aus
(i) Aminopropyl-funktionellen Gruppen der Formel
   -(CH₂)₃-NH₂ oder -(CH₂)₃-NHR' oder -(CH₂)₃-NH(CH₂)₂-NH₂ oder -(CH₂)₃-NH(CH₂)₂-NH(CH₂)₂-NH₂, worin R' eine lineare, verzweigte oder cyclische Alkyl-Gruppe mit 1 bis 18 C-Atomen oder eine Aryl-Gruppe mit 6 bis 12 C-Atomen bedeutet, und
(ii) Methoxy-, Ethoxy-, 2-Methoxyethoxy- und/oder Propoxy-Gruppen und
(iii) gegebenenfalls Alkyl-, Alkenyl-, Isoalkyl-, Cycloalkyl- mit 1 bis 18 C-Atomen und/oder Aryl-Gruppen mit 6 bis 12 C-Atomen bestehen,
wobei an ein Silicium-Atom höchstens eine Aminopropyl-funktionelle Gruppe gebunden ist und der Oligomerisierungsgrad für Verbindungen der allgemeinen Formel I im Bereich von 2 < m < 30 und der für Verbindungen der allgemeinen Formel II von 3 ≤ n ≤ 30 und der Quotient aus dem molaren Verhältnis Si/Alkoxy-Gruppierung ≥ 0,5 ist.

Erfindungsgemäße Gemische kettenförmiger und cyclischer Siloxan-Oligomerer weisen vorzugsweise einen Gehalt an Alkoxy-Gruppen von mehr als 0,1 Gew.-% und weniger als 30 Gew.-%, besonders vorzugsweise 5 bis 25 Gew.-%, bezogen auf das Gewicht der vorliegenden Siloxan-Oligomere, auf.

Vorzugsweise bestehen in einem erfindungsgemäßen Gemisch die Substituenten R aus (i) Aminopropyl-, Aminoethylaminopropyl-, Aminoethylaminoethylaminopropyl-, Methylaminopropyl-, n-Butylaminopropyl-, Cyclohexylaminopropyl- und/oder Phenylaminopropyl-Gruppen und (ii) Methoxy-, Ethoxy-, 2-Methoxyethoxy- und/oder Propoxy-Gruppen und (iii) gegebenenfalls Methyl-, Vinyl-, Ethyl-, Propyl-, Isobutyl-, Octyl-, Hexadecyloder Phenyl-Gruppen.

Als Beispiele seien nachfolgend einige bevorzugte Systeme kettenförmiger und cyclischer Siloxan-Oligomer aufgeführt: 3-Aminopropyl-/n-Propyl-/Alkoxysiloxane; N-Aminoethyl-3-aminopropyl-/n-Propyl-/Alkoxy-siloxane; N-Butylaminopropyl-/methyl-/Alkoxy-siloxane, wobei die Alkoxy-Gruppen bevorzugt Methoxy- oder Ethoxy-Gruppen sind, es können aber auch Ethoxy- und Methoxy-Gruppen nebeneinander vorliegen.

Ferner ist Gegenstand ein Verfahren zur Herstellung eines erfindungsgemäßen Gemisches kettenförmiger und cyclischer Siloxan-Oligomerer durch gezielte Hydrolyse, wobei man als Komponente A mindestens ein Aminopropyl-funktionelles Trialkoxysilan oder ein Aminopropyl-funktionelles Methyldialkoxysilan und gegebenenfalls als Komponente B mindestens ein Alkyl-, Alkenyl-, Isoalkyl-, Cycloalkyltrialkoxysilan mit 1 bis 18 C-Atomen und/oder Phenyltrialkoxysilan und/oder Alkyl-, Alkenyl-, Isoalkyl-, Cycloalkylmethyldialkoxysilan mit 1 bis 18 C-Atomen und/oder Phenylmethyldialkoxysilan und gegebenenfalls als Komponente C ein Tetraalkoxysilan einsetzt, die Komponenten A, gegebenenfalls B und gegebenenfalls C nacheinander oder in Mischung unter Einsatz von 0,6 bis 1,2 mol Wasser pro 1 mol Si und der 0,1- bis 5fachen Gewichtsmenge an Methanol oder Ethanol, bezogen auf die eingesetzten Alkoxysilane, bei einer Temperatur von 10 bis 95 °C gezielt hydrolysiert sowie kondensiert und nachfolgend den eingesetzten sowie bei der Umsetzung freigewordenen Alkohol bei Normaldruck oder unter vermindertem Druck und einer Sumpftemperatur bis 120 °C destillativ aus dem Produktgemisch entfernt.

Für die Herstellung erfindungsgemäßer Gemische kann man beispielsweise, aber nicht ausschließlich, von folgenden Verbindungen oder von Mischungen besagter Verbindungen ausgehen:
- Für Komponente A:
   3-Aminopropyltrialkoxysilane, N-Aminoethyl-3-aminopropyltrialkoxysilane, N-Aminoethyl-N-aminoethyl-3-aminopropyltrialkoxysilane, N-Methyl-aminopropyltrialkoxysilane, N-n-Butyl-aminopropyltrialkoxysilane, N-Cyclohexylaminopropyltrialkoxysilane, N-Phenyl-aminopropyltrialkoxysilane, 3-Aminopropyl-methyldialkoxysilane, N-Aminoethyl-3-aminopropyl-methyldialkoxysilane, N-Aminoethyl-N-aminoethyl-3-aminopropyl-methyldialkoxysilane, N-Methyl-aminopropyl-methyldialkoxysilane, N-n-Butyl-aminopropyl-methyldialkoxysilane, N-Cyclohexyl-aminopropyl-methyldialkoxysilane, N-Phenylaminopropyl-methyldialkoxysilane.
- Für Komponente B:
   Methyltrialkoxysilane, Ethyltrialkoxysilane, n-Propyltrialkoxysilane, Isobutyltrialkoxysilane, n-Octyltrialkoxysilane, Isobutyltrialkoxysilane, n-Octyltrialkoxysilane, Isooctyltralkoxysilane, Hexadecyltrialkoxysilane, Phenyltrialkoxysilane, Vinyltrialkoxysilane.
- Für Komponente C:
   Tetraalkoxysilane, wobei für zuvor genannte Alkoxygruppen Methoxy und Ethoxy bevorzugt sind.

Im allgemeinen führt man das erfindungsgemäße Verfahren wie folgt aus:
In der Regel legt man zunächst die Komponente A, gegebenenfalls Komponente B und gegebenenfalls Komponente C vor. Der Alkoxysilanmischung kann ein Löse- bzw. Verdünnungsmittels, beispielsweise Methanol oder Ethanol, zugegeben werden. Geeigneterweise gibt man ferner die für die Umsetzung berechnete Menge an Wasser zu, geeigneterweise unter guter Durchmischung, beispielsweise unter Rühren. Vor oder nach der Wasserzugabe kann man das Reaktionsgemisch erwärmen und nach der Umsetzung das so erhaltene Produktgemisch destillativ in besagter Weise aufarbeiten. Bevorzugt führt man die destillative Aufarbeitung der Produktmischung bei einer Temperatur im Bereich von 50 bis 120 °C unter Normaldruck und/oder vermindertem Druck durch.

Beim erfindungsgemäßen Verfahren setzt man die Komponenten A, B und C vorzugsweise in einem molaren Verhältnis A : B : C von 1 : 0 : 0 bis 1 : 10 : 0, vorzugsweise von 1 :0:0 bis 1 :4:0, oder von 1:0:0 bis 1:0:10, vorzugsweise von 1 : 0: 0 bis 1 : 0: 4, oder von 1 :0:0 bis 1:10:10, vorzugsweise von 1 : 0 : 0 bis 1 : 4 : 4, ein.

Ferner setzt man beim erfindungsgemäßen Verfahren bevorzugt Alkoxysilane mit Methoxy- oder Ethoxy-Gruppen entsprechend dem als Löse- bzw. Verdünnungsmittel verwendeten Alkohol ein. Auch als Löse- bzw. Verdünnungsmittel verwendet man geeigneterweise Methanol oder Ethanol oder eine Mischung aus Methanol und Ethanol. Man kann aber auch andere Alkohole oder Alkoholmischungen verwenden.

Beim erfindungsgemäßen Verfahren führt man die Hydrolyse und Kondensation eingesetzter Alkoxysilane bevorzugt unter Normaldruck bei einer Temperatur von 10 bis 95 °C, besonders vorzugsweise bei 60 bis 80 °C, durch. Üblicherweise führt man die Umsetzung unter Normaldruck durch. Man kann die Umsetzung aber auch unter vermindertem Druck oder bei Überdruck durchführen. Geeigneterweise läßt man das Reaktionsgemisch über 2 bis 8 Stunden reagieren, bevor man mit der destillativen Aufarbeitung des Produktgemischs beginnt.

Nach destillativer Aufarbeitung enthält das erfindungsgemäße Produkt bevorzugt weniger als 5 Gew.-% der Komponenten A, B und C und insbesondere weniger als 1 Gew.-% an freien Alkoholen.

Erfindungsgemäße Gemische kettenförmiger und cyclischer Siloxan-Oligomerer können vorteilhaft beispielsweise, aber nicht ausschließlich folgenden Verwendungen zugeführt werden:

Gegenstand der vorliegenden Erfindung ist somit die Verwendung eines erfindungsgemäßen Gemisches kettenförmiger und cyclischer Siloxan-Oligomerer als Mittel zur Oberflächenmodifizierung pulverförmiger Stoffe, zur Silanisierung von feinteiligen anorganischen Füllstoffen und Pigmenten, ferner zur Behandlung von mineralischen, organischen und metallischen Oberflächen, wie z. B. Beton, Aluminium, Stahl sowie Kunststoffe (u. a. PVC, PMMA, um nur einige zu nennen). So kann ein erfindungsgemäßes Gemisch kettenförmiger und cyclischer Siloxan-Oligomerer in vorteilhafter Weise auch für Hydrophobierung von Oberflächen eingesetzt werden.

Ferner ist Gegenstand der vorliegenden Erfindung die Verwendung eines erfindungsgemäßen Gemisches kettenförmiger und cyclischer Siloxan-Oligomerer als Haftvermittler in gefüllten thermoplastischen Compounds, z. B. HFFR-Compounds (Halogen Free Flame Retardants), zur Erzielung verbesserter mechanischer Festigkeit und verbesserter elektrischer Isoliereigenschaften.

Darüber hinaus ist Gegenstand der vorliegenden Erfindung die Verwendung eines erfindungsgemäßen Gemisches kettenförmiger und cyclischer Siloxan-Oligomerer als Haftvermittler in Kleb- und Dichtstoffen zur Erzielung verbesserter Gebrauchseigenschaften, insbesondere kontrollierten Aushärteverhaltens, verbesserter mechanischer Festigkeit sowie verbesserter Feuchtigkeitsresistenz.

Auch ist Gegenstand die Verwendung eines erfindungsgemäßen Gemisches kettenförmiger und cyclischer Siloxan-Oligomerer zur Modifizierung und Vernetzung organischer Harze, als Bindemittel in Farben und Lacken mit verbesserten Gebrauchseigenschaften sowie zur Beschichtung von Glasfasern, zur verbesserten Haftung dieser Glasfasern in damit verstärkten Kunststoffen und zur Erzielung verbesserter mechanischer Festigkeit.

Besonders vorteilhafte Eigenschaften der erfindungsgemäßen Siloxan-Oligomerengemische gegenüber standardmäßig eingesetzten monomeren aminofunktionellen Silanen sind der erhöhte Siedepunkt, der erhöhte Flammpunkt, der erniedrigte Dampfdruck, die verringerte Menge an freigesetztem Hydrolysealkohol während der Anwendung (VOC) sowie insbesondere die chemische Multifunktionalität".

Die vorliegende Erfindung wird durch die nachfolgenden Beispiele näher erläutert:

### Beispiel 1

In einem 4-l-Rührreaktor aus Glas mit Vakuum-, Dosier- und Destillationseinrichtung werden 1 791 g 3-Aminopropyltrimethoxysilan (AMMO) und 820,5 g n-Propyltrimethoxysilan (PTMO) vorgelegt. 216,0 g Wasser und 300,0 g Methanol werden gemischt und die Mischung über die Dosiervorrichtung innerhalb von 20 Minuten zugegeben. Die Reaktionsmischung erwärmt sich von Raumtemperatur auf ca. 70 °C. Anschließend wird 5 Stunden bei ca. 65 °C gerührt und danach Methanol unter Vakuum (Sumpftemperatur 50 bis 70 °C, Druck von 400 auf 10 hPa fallend) über 2 Stunden abdestilliert. Erhalten werden 1 924 g einer farblosen und klaren Flüssigkeit mit folgenden Eigenschaften:

| | |
|---|---|
| Freies MeOH (gaschromatographisch) | 0,3 Gew.-% |
| Silicium | 20,8 Gew.-% |
| Stickstoff | 6,9 Gew.-% |
| Viskosität | 35 mPa s (DIN 53 015) |
| Flammpunkt | 115 °C (DIN 51 755) |
| Dichte | 1,103 g/ml (DIN 51 757) |
| Mittlere Molmasse (Gelpermeationschromatographie) | 1,000 g/mol |

### Beispiel 2

In einem 2-l-Rührreaktor aus Glas mit Vakuum-, Dosier- und Destillationseinrichtung werden 246 g n-Propyltrimethoxysilan (PTMO) vorgelegt und auf 80 °C erhitzt. 21,6 g Wasser und 144,2 g Methanol werden gemischt und über die Dosiervorrichtung innerhalb von 30 Minuten zugegeben. Die Temperatur der Reaktionsmischung verändert sich dabei nicht. Nach beendeter Zugabe des Wasser/Methanol-Gemisches wird 2 Stunden bei 80 °C gerührt. Anschließend werden bei 80 °C 667 g Ethlyendiaminopropyltrimethoxysilan (DAMO) zugegeben und 30 Minuten gerührt. Danach wird eine Mischung aus 43,2 g Wasser und 288,4 g Methanol über 30 Minuten zugegeben und die Reaktionsmischung 1 Stunde bei 80 °C gerührt.

Das in der Reaktionsmischung enthaltene Methanol wird zunächst bei Atmosphärendruck (ca. 300 g über 3 Stunden) und der Rest dann unter Vakuum (Sumpftemperatur 70 bis 90 °C, Druck von 450 auf 1 hPa fallend) über 3 Stunden abdestilliert. Es folgt noch eine Vakuum-Nachbehandlung über 1 Stunde bei 1 hPa und ca. 110 °C Sumpftemperatur. Erhalten werden 690 g einer gelben, klaren Flüssigkeit mit folgenden Eigenschaften:

| | |
|---|---|
| Freies MeOH (gaschromatographisch) | <0,1 Gew.-% |
| Silicium | 17,3 Gew.-% |
| Stickstoff | 10,8 Gew.-% |
| Viskosität | 208 mPa s (DIN 53 015) |
| Siedepunkt | 267 °C (ASTM D-1120) |
| Flammpunkt | 136 °C (DIN 51 755) |
| Dichte | 1,096 g/ml (DIN 51 757) |
| Gesamtchlorid-Gehalt | 88 mg/kg |
| Mittlere Molmasse (Gelpermeationschromatographie) | ca. 1.000 g/mol |

## Patentansprüche

1. Gemisch kettenförmiger und cyclischer Siloxan-Oligomerer der allgemeinen Formeln I und II, 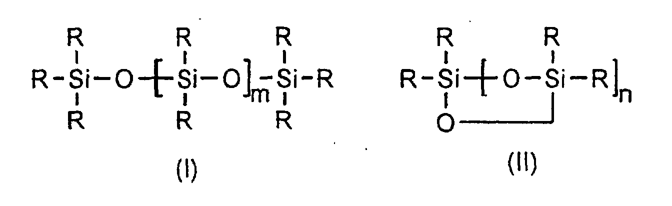 in denen die Substituenten R aus
(i) Aminopropyl-funktionellen Gruppen der Formel
-(CH₂)₃-NH₂ oder -(CH₂)₃-NHR' oder -(CH₂)₃-NH(CH₂)₂-NH₂ oder -(CH₂)₃-NH(CH₂)₂-NH(CH₂)₂-NH₂, worin R' eine lineare, verzweigte oder cyclische Alkyl-Gruppe mit 1 bis 18 C-Atomen oder eine Aryl-Gruppe mit 6 bis 12 C-Atomen, und
(ii) Methoxy-, Ethoxy-, 2-Methoxyethoxy- und/oder Propoxy-Gruppen und
(iii) gegebenenfalls Alkyl-, Alkenyl-, Isoalkyl-, Cycloalkyl- mit 1 bis 18 C-Atomen und/oder Aryl-Gruppen mit 6 bis 12 C-Atomen bestehen,
wobei an ein Silicium-Atom höchstens eine Aminopropyl-funktionelle Gruppe gebunden ist und der Oligomerisierungsgrad für Verbindungen der allgemeinen Formel I im Bereich von 2 < m < 30 und der für Verbindungen der allgemeinen Formel II von 3 ≤ n ≤ 30 und der Quotient aus dem molaren Verhältnis Si/Alkoxy-Gruppierung ≥ 0,5 ist.

2. Gemisch kettenförmiger und cyclischer Siloxan-Oligomerer nach Anspruch 1,
**gekennzeichnet durch**
einen Gehalt an Alkoxy-Gruppen von mehr als 0,1 Gew.-% und weniger als 50 Gew.-%, bezogen auf das Gewicht des vorliegenden Siloxan-Oligomerengemisches.

3. Gemisch kettenförmiger und cyclischer Siloxan-Oligomerer nach Anspruch 1 oder 2,
**dadurch gekennzeichnet,**
**daß** die Substituenten R aus (i) Aminopropyl-, Aminoethylaminopropyl-, Aminoethylaminoethylaminopropyl-, Methylaminopropyl-, n-Butylaminopropyl-, Cyclohexylaminopropyl- und/oder Phenylaminopropyl-Gruppen und (ii) Methoxy-, Ethoxy-, 2-Methoxyethoxy- und/oder Propoxy-Gruppen und (iii) gegebenenfalls Methyl-, Ethyl-, Vinyl-, Propyl-, Isobutyl-, Octyl-, Hexadecyl- oder Phenyl-Gruppen bestehen.

4. Gemisch kettenförmiger und cyclischer Siloxan-Oligomerer nach einem der Ansprüche 1 bis 3,
**gekennzeichnet durch**
einen Siedepunkt > 200 °C.

5. Gemisch kettenförmiger und cyclischer Siloxan-Oligomerer nach einem der Ansprüche 1 bis 4,
**gekennzeichnet durch**
einen Flammpunkt > 100 °C.

6. Verfahren zur Herstellung eines Gemisches kettenförmiger und cyclischer Siloxan-Oligomerer nach den Ansprüchen 1 bis 5 durch gezielte Hydrolyse, wobei man als Komponente A mindestens ein Aminopropyl-funktionelles Trialkoxysilan oder ein Aminopropyl-funktionelles Methyldialkoxysilan und gegebenenfalls als Komponente B mindestens ein Alkyl-, Alkenyl-, Isoalkyl-, Cycloalkyltrialkoxysilan mit 1 bis 18 C-Atomen und/oder Phenyltrialkoxysilan und/oder Alkyl-, Alkenyl-, Isoalkyl-, Cycloalkylmethyldialkoxysilan mit 1 bis 18 C-Atomen und/oder Phenylmethyldialkoxysilan und gegebenenfalls als Komponente C ein Tetraalkoxysilan einsetzt, die Komponenten A, gegebenenfalls B und gegebenenfalls C nacheinander oder in Mischung unter Einsatz von 0,6 bis 1,2 mol Wasser pro 1 mol Si und der 0,1- bis 5fachen Gewichtsmenge an Methanol oder Ethanol, bezogen auf die eingesetzten Alkoxysilane, bei einer Temperatur von 10 bis 95 °C gezielt hydrolysiert sowie kondensiert und nachfolgend den eingesetzten sowie bei der Umsetzung freigewordenen Alkohol bei Normaldruck oder unter vermindertem Druck und einer Sumpftemperatur bis 120 °C destillativ aus dem Produktgemisch entfernt.

7. Verfahren nach Anspruch 6,
**dadurch gekennzeichnet,**
**daß** man die Komponenten A, B und C in einem molaren Verhältnis A : B : C von 1 : 0 : 0 bis 1 : 10 : 0 oder von 1 : 0 : 0 bis 1 : 0 : 10 oder von 1 : 0 : 0 bis 1 : 10 : 10 einsetzt.

8. Verfahren nach Anspruch 6 oder 7,
**dadurch gekennzeichnet,**
**daß** man Alkoxysilane mit Methoxy- oder Ethoxy-Gruppen entsprechend dem als Löse- bzw. Verdünnungsmittel verwendeten Alkohol einsetzt.

9. Verfahren nach einem der Ansprüche 6 bis 8,
**dadurch gekennzeichnet,**
**daß** man die Hydrolyse und Kondensation unter Normaldruck bei einer Temperatur von 10 bis 95 °C durchführt.

10. Verfahren nach einem der Ansprüche 6 bis 9,
**dadurch gekennzeichnet,**
**daß** man die destillative Aufarbeitung der Produktmischung bei einer Temperatur im Bereich von 50 bis 120 °C unter Normaldruck und/oder vermindertem Druck durchführt.

11. Verfahren nach einem der Ansprüche 6 bis 10,
**dadurch gekennzeichnet,**
**daß** das nach destillativer Aufarbeitung erhaltene Produkt weniger als 5 Gew.-% der eingesetzten Komponenten A, B und C und weniger als 1 Gew.-% an freien Alkoholen enthält.

12. Verwendung eines Gemisches kettenförmiger und cyclischer Siloxan-Oligomerer nach den Ansprüchen 1 bis 11 als Haftvermittler in Kleb- und Dichtstoffen, zur Modifizierung und Vernetzung organischer Harze. als Bindemittel in Farben und Lacken, zur Beschichtung von Glasfasern. als Haftvermittler in gefüllten thermoplastischen Compounds, für die Behandlung von mineralischen, organischen und metallischen Oberflächen, zur Hydrophobierung von Oberflächen, zur Oberflächenmodifizierung pulverförmiger Stoffe sowie zur Silanisierung von Füllstoffen und Pigmenten.

## Claims

1. A mixture of catenate and cyclic siloxane oligomers of the formulae I and II 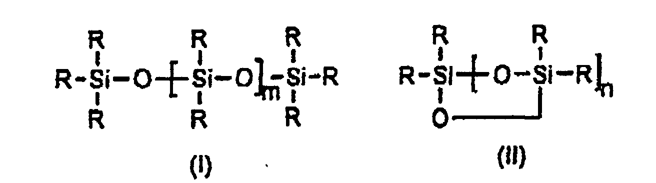 where the substituents R consist of
(i) aminopropyl-functional groups of the formula -(CH₂)₃-NH₂ or -(CH₂)₃-NHR' or -(CH₂)₃-NH(CH₂)₂-NH₂ or -(CH₂)₃-NH(CH₂)₂-NH(CH₂)₃-NH₂, in which R' is a linear, branched or cyclic alkyl group of 1 to 18 carbon atoms or an aryl group of 6 to 12 carbon atoms, and
(ii) methoxy, ethoxy, 2-methoxyethoxy and/or propoxy groups, and
(iii) if desired, alkyl, alkenyl, isoalkyl or cycloalkyl groups of 1 to 18 carbon atoms and/or aryl groups of 6 to 12 carbon atoms,
and where not more than one aminopropyl-functional group is attached to one silicon atom and the degree of oligomerization of compounds of the formula I is within the range 2 < m < 30 and that of compounds of the formula II is 3 ≤ n ≤ 30 and the quotient of the molar proportion of Si/alkoxy group is ≥ 0.5.

2. A mixture of catenate and cyclic siloxane oligomers according to claim 1, **characterized by** an alkoxy group content of more than 0.1% by weight and less than 50% by weight, based on the weight of the siloxane oligomer mixture present.

3. A mixture of catenate and cyclic siloxane oligomers according to claim 1 or 2, **characterized in that** the substituents R consist of (i) aminopropyl, aminoethylaminopropyl, aminoethylaminoethylaminopropyl, methylaminopropyl, n-butylaminopropyl, cyclohexylaminopropyl and/or phenylaminopropyl groups and (ii) methoxy, ethoxy, 2-methoxyethoxy and/or propoxy groups, and (iii), if desired, methyl, ethyl, vinyl, propyl, isobutyl, octyl, hexadecyl or phenyl groups.

4. A mixture of catenate and cyclic siloxane oligomers according to any one of claims 1 to 3, **characterized by** a boiling paint > 200°C.

5. A mixture of catenate and cyclic siloxane oligomers according to any one of claims 1 to 4, **characterized by** a flash point > 100°C.

6. A process for preparing a mixture of catenate and cyclic siloxane oligomers according to any of claims 1 to 5 by controlled hydrolysis using at least one aminopropyl-functional trialkoxysilane or aminopropyl-functional methyldialkoxysilane as component A and, if desired, at least one alkyl-, alkenyl-, isoalkyl- or cycloalkyl-trialkoxysilane of 1 to 18 carbon atoms and/or phenyltrialkoxysilane and/or alkyl-, alkenyl-, isoalkyl- or cycloalkyl-methyldialkoxysilane of 1 to 18 carbon atoms and/or phenylmethyldialkoxysilane as component B and, if desired, a tetraalkoxysilane as component C, subjecting the components A and - if used - B and C in succession or in a mixture to controlled hydrolysis and condensation using from 0.6 to 1.2 mol of water per mole of Si and from 0.1 to 5 times the amount by weight of methanol and/or ethanol, based on the alkoxysilanes employed, at a temperature from 10 to 95°C and subsequently removing the alcohol employed, and that liberated during the reaction, from the product mixture by distillation under atmospheric pressure or reduced pressure and at a liquid-phase temperature of up to 120°C.

7. A process according to claim 6, **characterized in that** components A, B and C are employed in a molar ratio A : B : C of from 1 : 0 : 0 to 1 : 10 : 0 or from 1 : 0 : 0 to 1 : 0 : 10 or from 1 : 0 : 0 to 1 : 10 : 10.

8. A process according to claim 6 or 7, **characterized in that** alkoxysilanes having methoxy or ethoxy groups in accordance with the alcohol that is used as solvent or diluent are employed.

9. A process according to any one of claims 6 to 8, **characterized in that** the hydrolysis and condensation are conducted under atmospheric pressure at a temperature from 10 to 95°C.

10. A process according to any one of claims 6 to 9, **characterized in that** the distillative workup of the product mixture is conducted under atmospheric pressure and/or reduced pressure at a temperature in the range from 50 to 120°C.

11. A process according to any one of claims 6 to 10, **characterized in that** the product obtained following distillative workup contains less than 5% by weight of the components A, B and C employed and less than 1% by weight of free alcohols.

12. The use of a mixture of catenate and cyclic siloxane oligomers according to any of claims 1 to 11 as adhesion promoters in adhesives and sealants, for modification and crosslinking of organic resins, as binders in inks and coatings, for coating glass fibres, as adhesion promoters in filled thermoplastic compounds, for the treatment of mineral, organic and metallic surfaces, for hydrophobicization of surfaces, for surface modification of pulverulent substances, or for silanization of fillers and pigments.

## Revendications

1. Mélanges d'oligomères de siloxane en forme de chaînes et cycliques, de formules générales I et II 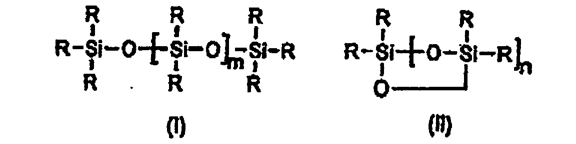 dans lesquelles les substituants R consistent en :
(i) des groupes fonctionnalisés par un aminopropyle de formule :
- (CH₂)₃-NH₂ ou -(CH₂)₃-NHR' ou -(CH₂)₃-NH(CH₂)₂-NH₂ ou
- (CH₂)₃-NH(CH₂)₂-NH(CH₂)₂-NH₂, dans lesquelles R' est un groupe alkyle linéaire, ramifié ou cyclique ayant de 1 à 18 atomes de carbone ou un groupe aryle ayant de 6 à 12 atomes de carbone et,
ii) des groupes méthoxy, éthoxy, 2-méthoxyéthoxy et/ou propoxy et,
iii) éventuellement des groupes alkyle, alkényle, isoalkyle, cycloalkyle ayant de 1 à 18 atomes de carbone et/ou des groupes aryle ayant de 6 à 12 atomes de carbone, avec au maximum un groupe fonctionnalisé par un aminopropyle lié à un atome de silicium, et dont le degré d'oligomérisation pour des composés de formule générale I, se situe dans la zone de 2 < m < 30 et celui pour les composés de formule générale II de 3 < n ≤ 30, et le quotient à partir du rapport molaire Si/alkoxy est ≥ 0,5.

2. Mélange d'oligomères de siloxanes en forme de chaînes et cycliques, selon la revendication 1,
**caractérisé par**
une teneur en groupe alkoxy de plus de 0,1 % en poids et de moins de 50 % en poids, rapporté au poids du mélange d'oligomères siloxanes.

3. Mélange d'oligomères de siloxane en forme de chaînes et cycliques selon l'une quelconque des revendications 1 ou 2,
**caractérisé en ce que**
les substituants R consistent en :
(i) des groupes aminopropyle, aminoéthylaminopropyle, aminoéthylaminoéthylsminopropyle, méthylaminopropyle, n-butalaminopropyl, cyclohexylaminopropyle et/ou phénylaminopropyle et
(ii) des groupes méthoxy, éthoxy, 2-méthoxyéthoxy et/ou propoxy, et
(iii) le cas échéant des groupes méthyle, éthyle, vinyle, propyle, isobutyle, octyle, hexadécyle ou phényle.

4. Mélange d'oligomères de siloxanes en forme de chaînes et cycliques selon l'une quelconque des revendications 1 à 3,
**caractérisé par**
un point d'ébullition > 200°C.

5. Mélange d'oligomères de siloxanes en forme de chaînes et cycliques selon l'une quelconque des revendications 1 à 4,
**caractérisé par**
un point d'ébullition > 100°C.

6. Procédé de production d'un mélange d'oligomères de siloxane en forme de chaînes et cycliques selon l'une quelconque des revendications 1 à 5,
**caractérisé par**
une hydrolyse ciblée dans laquelle on met en oeuvre comme composant A, au moins un trialkoxysilane fonctionnalisé par un aminopropyle, ou une thyldialkoxysilane fonctionnalisé par un aminopropyle et le cas échéant comme composant B, au moins un alkyl-, alkényl-, isoalkyl-, cycloalkyltrialkoxysilane ayant de 1 à 18 atomes de carbone, et/ou phényltrialkoxysilane et/ou un alkyl-, un alkényl-, un isoalkyl-, un cycloalkylméthyldialkoxysilane ayant de 1 à 18 atomes de cartone et/ou un phénylméthyldialkoxysilane et le cas échéant comme composant C, un tétralkoxysilane, on hydrolyse et on condense d'une manière ciblée les composants A, éventuellement B et éventuellement C les uns après les autres ou en mélange en utilisant de 0,6 à 1,2 mol d'eaur par molde Si et de 0,1 à 5 fois la quantité en poids de méthanol ou d'éthanol rapporté aux alkoxysilanes mis en oeuvre, à une température de 10 à 95°C, et ensuite on chasse par distillation du mélange, à pression normale ou sous pression réduite et à une température de pot allant jusqu'à 120°C, l'alcool mis en oeuvre ainsi que celui libéré au cours de la réaction.

7. Procédé selon la revendication 6,
**caractérisé en ce qu'**
on met en oeuvre les composants A, B et C dans un rapport molaire A : B : C ou 1 : 0 : 0 à 1 : 10 : 0 ou de 1 : 0 : 0 à 1 : 0 : 10 ou de 1 : 0 : 0 à 1 : 10 : 10.

8. Procédé selon l'une quelconque des revendications 6 ou 7,
**caractérisé en ce qu'**
on met en oeuvre des alkoxysilanes ayant des groupes méthoxy ou éthoxy correspondant à l'alcool utilisé comme solvant ou comme agent diluant.

9. Utilisation selon l'une quelconque des revendications 6 à 8,
**caractérisé en ce qu'**
on effectue l'hydrolyse et la condensation à pression normale à une température de 10 à 95°C.

10. Procédé selon l'une quelconque des revendications 6 à 9,
**caractérisé en ce qu'**
on effectue la purification par distillation du mélange de produits à une température dans la plage de 50 à 120°C, à pression normale et/ou sous pression réduite.

11. Procédé selon l'une quelconque des revendications 6 à 10,
**caractérisé en ce que**
le produit obtenu après purification par distillation, renferme moins de 5 % en poids des composants A, B et C mis en oeuvre et moins de 1 % en poids d'alcools libres.

12. Utilisation d'un mélange d'oligomères de siloxanes en forme de chaînes et cycliques, selon l'une quelconque des revendications 1 à 11, comme adjuvant d'adhésion dans des adhésifs et des substances d'étanchéité en vue de la modification et la réticulation de résines organiques, comme agent liant dans des colorants et les laques, pour le revêtement de fibres de verre, comme adjuvant d'adhésion dans des composites thermoplastiques chargés, pour le traitement des surfaces minérales, organiques et métalliques, pour l'hydrophobisation de surfaces, pour la modification de surfaces de substances pulvérulentes ainsi que pour la silanisation de substances de charge et de pigments.
